# EUROPEAN PATENT SPECIFICATION

(11) **EP 3 434 703 B1**
(45) Date of publication and mention of the grant of the patent: **07.04.2021**
(21) Application number: 16895243.0
(22) Date of filing: 15.11.2016
(51) Int. Cl.: C08F 236/08, C08F 236/06, C08F 4/642, C08F 2/42, C08F 2/02, C08F 2/01, C08C 4/00, C08F 236/04, B01D 3/00

(54) **METHOD FOR INDUSTRIAL PRODUCTION OF TRANS-BUTADIENE-ISOPRENE COPOLYMER RUBBER AND APPARATUS THEREFOR**
VERFAHREN ZUR INDUSTRIELLEN HERSTELLUNG VON TRANS-BUTADIEN-ISOPREN-COPOLYMERKAUTSCHUK UND VORRICHTUNG DAFÜR
PROCÉDÉ DE PRODUCTION INDUSTRIELLE DE CAOUTCHOUC DE COPOLYMÈRE DE TRANS-BUTADIÈNE-ISOPRÈNE ET APPAREIL ASSOCIÉ

(30) Priority: 24.03.2016 CN 201610173038
(43) Date of publication of application: 30.01.2019
(73) Proprietor: Qingdao University Of Science And Technology, Qingdao, Shandong 266042 (CN); Shandong Huaju Polymer Materials Co., Ltd., Binzhou, Shandong 256500 (CN); Chambroad Chemical Industry Research Institute Co., Ltd., Binzhou, Shandong 256500 (CN)
(72) Inventor: HE, Aihua, Qingdao Shandong 266042 (CN); MA, Yunsheng, Binzhou Shandong 256500 (CN); SHAO, Huafeng, Qingdao Shandong 266042 (CN); YAO, Gang, Binzhou Shandong 256500 (CN); LIU, Chenguang, Qingdao Shandong 266042 (CN); LUAN, Bo, Binzhou Shandong 256500 (CN); WANG, Riguo, Binzhou Shandong 256500 (CN)
(74) Representative: PGA S.p.A., Milano, Succursale di Lugano
(86) International application number: PCT/CN2016/105841
(87) International publication number: WO 2017/161898

(56) References cited:
- WO-A1-03/022919
- CN-A- 101 357 960
- CN-A- 102 050 968
- CN-A- 103 204 973
- CN-A- 103 387 641
- CN-A- 103 897 080
- CN-A- 104 628 914
- CN-A- 105 601 814
- US-A- 3 347 839
- US-A- 5 844 044
- US-A1- 2009 253 869
- US-A1- 2009 281 257

## Description

### CROSS REFERENCE TO RELATED APPLICATIONS

This application claims the priority of Chinese Patent Application No. 201610173038.8, filed on March 24, 2016, and the disclosures of which are hereby incorporated by reference.

### FIELD

The present disclosure relates to the field of trans-1,4-poly(butadiene-co-isoprene) copolymer rubber (TBIR) production in petrochemical industry, specifically to a method for industrially producing TBIR by bulk polymerization, and an apparatus for implementing the method.

### BACKGROUND

Trans-1,4-poly(butadiene-co-isoprene) copolymer rubber (TBIR) as a new generation rubber material is obtained through butadiene and isoprene copolymerization. Comparing with natural rubber, this material has advantages like excellent flexural fatigue resistance, low rolling resistance, low heat built-up and good wear resistance, and is good candidate for energy-saving and environmentally friendly high-performance tire. The excellent dynamic performances including outstanding fatigue resistance and low heat build-up, endow TBIR a brilliant future in making damping rubber material. Patents (US5100965, WO9723521, US4020115, US5844044 and UK2029426) disclose excellent physical and mechanical properties of high trans-1,4-poly(butadiene-co-isoprene) copolymer rubber, especially excellent fatigue resistance and crack-growth resistance, making it an ideal rubber material for high performance tire.

Comparing with cis-1,4 polydiene, trans-1,4- polydiene is crystalline plastic at room temperature. A higher amount of sulfur or co-vulcanizing with other rubbers is generally used to make this trans-1.4 polymer to elastomeric material (ZL95110352.0, ZL200610043556.4).

TBIR is prepared primarily by using the coordination polymerization catalysts such as allyl-nickel catalyst system, TiCl₄/VOCl₃/Al(i-Bu)₃ catalyst system, allyl chromium-silicate catalyst system, lanthanide compound catalyst system (Dokl. Akad. Nauk SSSR, 1976; Ger. Pat. 2331921, 1975; Dokl. Akad. Nauk SSSR, 1973; Promst Sint Kauch, 1982; JPH0260907, 1990; US2005/0222348), and anion-alkyllithium system (US4020115, 1997; UK Pat2029426, 1980; US5100965, 1992). However, all the above systems have problems like low catalytic efficiency, low trans-1,4 structure content, or other problems not mentioned. For example, trans-1,4 structure content in US Patent US4020115 is less than 80%. Also, solvents such as toluene are commonly used to carry out solution polymerization, causing cumbersome and complicated post-processing procedures due to the solvent recovery and refining.

By using supported titanium catalyst system (JPS6042412, 1985; China Elastomerics, 2002, 2003; Acta Polymerica Sinica, 2002; Synthetic Rubber Industry, 2002, 2011; Rubber Industry, 2010), TBIR with more than 97% trans-1,4 content and adjustable monomer composition can be synthesized. This system has relatively high catalytic efficiency, reaching 30000 times. Chinese invention patent ZL201210138621.7 discloses a trans-1,4-poly(butadiene-co-isoprene) copolymer rubber with more than 90% trans content, 0.5 - 80% butadiene unit content, 20 - 99.5% isoprene unit content and adjustable composition. In addition, the sequence distributions of the two monomers can be adjusted to gradient distribution or uniform distribution. However, no industrial production process or production apparatus is disclosed in this patent, and no way to guide the industrial production. Also, this patent does not solve problems like post-processing of the polymer, additives and extrusion granulation. Generally, coagulating process in post-processing of traditional rubber synthesis yields a large amount of waste water and high energy consumption.

In order to overcome and solve the above-mentioned problems of TBIR, like polymer microstructure controlling, and difficulties in polymerization process and industrialization, the present invention provides an industrial process for preparation of trans-1,4-poly(butadiene-co-isoprene) copolymer rubber and an apparatus to implement the process.

### SUMMARY

In view of above, one of the objects of the present disclosure is to provide a bulk polymerization method for industrially producing trans-1,4-poly(butadiene-co-isoprene) copolymer rubber (TBIR).

Another object of the present disclosure is to provide apparatus to carry out the industrial production of TBIR by the method of bulk polymerization above.

The other object of the present disclosure is to provide a post-processing procedure for extrusion devolatilization and granulation of TBIR to avoid the disadvantages like yielding large amount of waste water and high energy consumption, which usually encountered in traditional bulk polymerization with steam coagulation process

In order to realize the objects above, the present disclosure provides a bulk polymerization process for industrially producing trans-1,4-poly(butadiene-co-isoprene) copolymer rubber, comprising:
1) subjecting a polymerization reactor to vacuum treatment and sufficient displacement with nitrogen to remove water and oxygen, adding sequentially the predefined amounts of refined isoprene monomer, butadiene monomer, cocatalyst, electron donor, primary catalyst and hydrogen by a distributor to the polymerization reactor, wherein molar ratio of titanium and/or vanadium in the primary catalyst to the monomer is (0.01 to 100)×10⁻⁵ : 1, the molar ratio of aluminum in the cocatalyst to titanium and/or vanadium in the primary catalyst is 1 to 200 : 1, the molar ratio of the hydrogen to titanium and/or vanadium in the primary catalyst is 1 to 2000 : 1, the temperature for co-polymerization is from 20 to 100 °C, the molar feeding ratio of the butadiene to the isoprene is 0.01 to 50 : 100, and the molar ratio of the electron donor to titanium and/or vanadium in the primary catalyst is 0 to 10 : 1, and the duration of polymerization under constant-temperature is from 2 to 48 hours;
2) delivering the polymer system to a termination device through a pipeline after a predefined polymerization time, and adding terminating agent to the termination device to terminate the polymerization;
3) delivering the polymer system from the termination device to extrusion devolatilization device and adding an antioxidant and/or a rubber additive to the extrusion devolatilization device; removing unreacted butadiene and isoprene monomers from the extrusion devolatilization device under reduced pressure, separating and refining the butadiene and isoprene by separation and refining device and then delivering to the polymerization reactor or a storage tank for use;
4) pelletizing the polymer through the extrusion devolatilization device to obtain pelletized trans-1,4-butadiene-isoprene copolymer rubber (TBIR), drying, metering and packing the pelletized products.

According to the method of the present disclosure, butadiene and isoprene monomers are subjected to refinement before Step 1).

According to the method of the present disclosure, in Step 3), the unreacted monomers are recycled, and then separated and refined by separation and refining device, and then delivered back to the polymerization reactor for polymerization through the batching device or pumped to monomer storage tank.

The method for industrially producing trans-1,4-poly(butadiene-co-isoprene) copolymer rubber is a batch polymerization method or a continuous polymerization method.

According to the method provided by the present disclosure, the molar content of trans-1,4-unit in the copolymer rubber is more than 85%, the molar content of butadiene unit in the copolymer rubber is from 0.1 to 60%, Mooney viscosity of the copolymer rubber (100°C, 3+4min) is from 20 to 120, and the melting temperature of the copolymer rubber is less than 50°C.

In order to realize the method of the present disclosure for industrial production, the present disclosure provides an apparatus to implement the process, comprising a recovery and refining unit, a polymerization unit, a post-processing unit and a utility unit.

Recovery and refining unit, including refining tower and so on, is used to refine the material and monomers, and delivery them to the polymerization unit.

Recovery and separation device, including a refining tower, a gas holder, a separation tower and so on, is used to separate the recycled monomers and delivery them to the polymerization unit or storage tank for use.

Batching device, including a device for metering and pumping butadiene and isoprene, a device for metering and pumping the primary catalyst, cocatalyst and electron donor, and a device for metering hydrogen gas.

Polymerization device, including one polymerization reactor, or two or more than two polymerization reactors with the same or different models. The polymerization reactor may be kettle reactor or tower reactor or uniaxial horizontal reactor or biaxial horizontal reactor or loop reactor or tubular reactor, or a combination thereof.

Monitor and controller device, including an online temperature monitor, an online pressure monitor, and an online material detector and online material controller, wherein the online material detector comprises an online viscosity detector and an online material concentration detector, and the online material controller comprises a material solenoid valve and a computerized controller.

Termination device, including twin-screw extruder. The extrusion devolatilization device, comprising an extruder, a pelletizer, a blow drier and a vacuum pump, is used to remove the unreacted monomers, and mix the polymer with the antioxidant and/or rubber additive, extrude, granulate and dry the product. The post-processing unit also includes delivering, metering and packing device for the polymer, as well as batching, metering and delivering device for termination agent, antioxidant and rubber additive.

The utility unit comprises a cold, hot water and/or steam pipeline device for controlling the temperature of the polymerization reactor, and a vacuum device with high purity nitrogen for displacement of the polymerization reactor before polymerization and during overhaul.

The primary catalyst is a supported titanium and/or vanadium catalyst, wherein the titanium and/or vanadium account for 1 to 5% of the total mass of the primary catalyst, internal electron donor accounts for 0 to 20% of the total mass of the primary catalyst; the support of the primary catalyst is one selected from the group consisting of MgCl₂, MgBr₂, MgI₂ and SiO₂; the titanium compound is one selected from the group consisting of TiCl₄, TiBr₄ and TiI₄; the vanadium compound is one, two or more selected from the group consisting of VCl₃, VBr₃, VOCl₃, VOBr₃, VCl₄, VBr₄ and V₂O₅; the internal electron donor is one, two or more selected from the group consisting of ester, ether, ketone and anhydride.

The cocatalyst is one, two or more selected from the group consisting of triethyl aluminum, triisobutyl aluminum, dimethyl aluminum chloride, methyl aluminum dichloride, diethyl aluminum chloride, ethyl aluminum dichloride, diisobutyl aluminum chloride, isobutyl aluminum dichloride, diethyl aluminum hydride, ethyl aluminum hydride, isobutyl aluminum hydride and diisobutyl aluminum hydride.

The electron donor is one, two or more selected from a group consisting of phosphate ester, ether, ketone, anhydride, phenol, amine and silane compounds.

The cooling jacket of the polymerization reactor is used to control the polymerization temperature, and the copolymerization temperature is from 20 to 100°C.

The polymerization time is from 2 to 48 hours, which can be adjusted according to the conversion and product quality.

The extrusion devolatilization device is one selected from the group consisting of single-screw extruder, co-rotating twin-screw extruder, counter-rotating twin-screw extruder and horizontal drying extruder.

The extruder includes one extruders used independently, or two or more extruders used in series or in parallel connection, and series connection decreases the content of volatile material in the copolymer rubber, while parallel connection increases extrusion productivity of the copolymer rubber.

In the post-processing unit of the present disclosure, after polymerization, the polymerization system is transferred to termination device, and the terminating agent, such as one, two or more selected from carbon monoxide, carbon dioxide, nitrogen, air, water, and alcohol, acid, ketone, amine and phenol containing 4 to 8 carbon atoms, is added to the termination device, and molar ratio of the terminating agent to titanium and/or vanadium in the primary catalyst is 1 to 200: 1. The terminating agent is used to terminate the active center of the polymerization system. The terminated polymerization system is transferred to the extrusion devolatilization device. At the same time, the antioxidant which is one, two or more selected from the group consisting of 4010NA, MB, 2264, 264, MBZ, 800A, 1010A, 1010, 168, DSTP, 626, 4020 and 1076, is added from the charging position of the extrusion devolatilization device, and the weight ratio of the antioxidant to the TBIR copolymer rubber is 0.01 to 1: 100. Rubber additive, which is one, two or more selected from the group consisting of paraffin, aromatic oil, naphthenic oil, C5 resin, stearic acid, calcium stearate, magnesium stearate, zinc oxide, silicon dioxide, carbon black, and modified derivatives thereof, can also be added into the extrusion devolatilization device, and the weight ratio of the rubber additive to TBIR is 1 to 50: 100.

The unreacted monomers are recovered through the extrusion devolatilization device, and refined by the separation and refining device, so that the monomers are transferred back to the polymerization reactor or monomer storage tank for use. The polymer is well blended with the antioxidant and/or rubber additive through the extruder, and then extruded, pelletized, dried, metered and packaged.

By the methods and apparatus above, the present disclosure realizes the industrial production of the trans-1,4-poly(butadiene-co-isoprene) copolymer rubber with bulk polymerization technology.

### BRIEF DESCRIPTION OF DRAWINGS

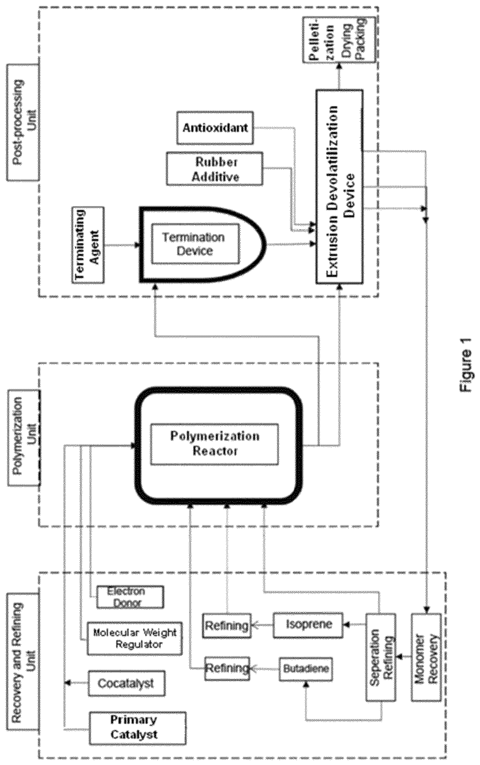

Figure 1 is the flow chart of the production process.

### DETAILED DESCRIPTION

In order to better illustrate the production process and working process of production apparatus of the present disclosure, and describe the technical means, characters and objects of the present disclosure in detail, the present disclosure is further illustrated in conjunction with specific embodiments hereinafter.

The raw materials of the present disclosure are as follows.

Butadiene (Qilu Petrochemical Co. Ltd., polymerization grade, purity > 99.0%), isoprene (Jinshan Petrochemical, Co. Ltd., polymerization grade, purity > 99.0%), supported titanium catalyst (self-made, TiCl₄ supported with MgCl₂, titanium content 3.2 wt%), supported vanadium catalyst (self-made, VOCl₃ supported with MgCl₂, vanadium content 3.5 wt%), triisobutyl aluminum and triethyl aluminum, purity 98%; hydrogen (Linzi Additive Factory, purity 99.99%) antioxidant 264 and antioxidant 2264 (industrial grade, Shanghai Jiacheng Chemical Co. Ltd.), ethanol and propanol (industrial grade, Laiyang Chemical Works). All the others like molecular weight regulator, electron donor, rubber additive and antioxidant are industrial goods available on the market.

### Example 1

A high pressure kettle reactor with double helical stirring paddles was subjected to vacuum treatment to remove water and oxygen. 120Kg of butadiene monomer (Bd), 2300Kg of isoprene monomer (Ip), 13Kg of triisobutyl aluminum (Al), 1000g of supported titanium catalyst (Ti) and hydrogen gas were measured and successively added to the reactor through the batching system, wherein Ti content of the supported titanium catalyst was 3.2 wt%, Al/Ti = 100 (molar ratio), and the hydrogen was 180g. Polymerization was carried out at 80°C for 10 hours. After the polymerization, the polymer system was transferred to a twin-screw extruder through a pipeline for terminating the reaction. 2.8Kg of ethanol as terminating agent was added to the twin-screw extruder at the same time for terminating the reaction and mix evenly. The terminated polymer system was transferred to the twin-screw extruder, and 5.00Kg of antioxidant 264 was added from the inlet of the extrusion devolatilization device. The unreacted butadiene and isoprene monomers were removed by the extrusion devolatilization device under reduced pressure. The product was extruded and pelletized by the extrusion devolatilization device, dried and weighed to give 530Kg product for packing. The product was tested and the results showed that the molar content of butadiene in the TBIR was 21%, and the molar content of the trans-1,4 unit in the copolymer was more than 90%, and the Mooney viscosity at 100°C (3+4 minutes) was 58.

### Example 2

A high pressure kettle reactor with double helical stirring paddles was subjected to vacuum treatment to remove water and oxygen. 220Kg of butadiene monomer (Bd), 604Kg of isoprene monomer (Ip), 150g of triisobutyl aluminum (Al), 200g of supported titanium catalyst (Ti), electron donor ether 0.01mol and 12g of hydrogen were measured and successively added to the reactor through the batching system. Polymerization was carried out at 30°C for 48 hours. After the polymerization, the polymer system was transferred to a twin-screw extruder through a pipeline for terminating the reaction. 60g of ethanol as terminating agent was added to the twin-screw extruder at the same time and stirred evenly to terminate the reaction. The terminated polymer system was then transferred to the twin-screw extruder, and 2.1Kg of antioxidant 264, 50Kg of aromatic oil (rubber additive) and 50Kg of silica were added from the inlet of the extrusion devolatilization device. The polymer was fully mixed with the antioxidant and rubber additive through the extrusion devolatilization device. The unreacted butadiene and isoprene monomers were removed by the extrusion devolatilization device under reduced pressure. The product was extruded and pelletized by the extrusion devolatilization device, dried and weighed to give 304Kg product for packing. The product was tested and the results showed that the molar content of butadiene in the TBIR was 50%, and the molar content of the trans-1,4 structure in the copolymer was more than 90%, and the Mooney viscosity at 100°C (3+4 minutes) was 85.

### Example 3

A high pressure kettle reactor (No.1 reactor) with double helical stirring paddles and a horizontal reactor (No.2 reactor) were series connected and subjected to vacuum treatment to remove water and oxygen. 360Kg of butadiene monomer (Bd), 2300Kg of isoprene monomer (Ip), 10Kg of triisobutyl aluminum (Al), supported titanium catalyst (Ti), electron donor and hydrogen gas were measured and successively added to the No.1 reactor through the batching system, wherein the supported titanium catalyst was 1.5Kg, electron donor tetrahydrofuran was 0.1mol, and the hydrogen gas was 20g. The agitation speed of the polymerization kettle reactor (No.1 reactor) was 80r/min and the polymerization was carried out at 50°C for 2 hours. Then the polymer system was transferred to No.2 reactor through pipeline system, and the polymerization was carried out at 60°C for 5 hours at an agitation speed of 50r/min. The polymer system was transferred to a twin-screw extruder through a pipeline for terminating the reaction. 450g of ethanol as terminating agent was added at the same time and stirred evenly to terminate the reaction. The terminated polymer system was transferred to the twin-screw extrusion devolatilization machine, and 2.0Kg of antioxidant 264 was added from the inlet of the extrusion devolatilization device. The unreacted butadiene and isoprene monomers were removed by the extrusion devolatilization device under reduced pressure. The product was extruded and pelletized by the extrusion devolatilization device, dried and weighed to give 1580Kg product for packing. The product was tested and the results showed that the molar content of butadiene in the TBIR was 36%, and the molar content of the trans-1,4 structure in the copolymer was 96%, and the Mooney viscosity at 100°C (3+4 minutes) was 92.

### Example 4

Except that the adding amount of hydrogen gas was 400g, the other operations were the same as that of Example 3. Finally, 1440Kg of pelletized TBIR was obtained. The product was tested and the results showed that molar content of butadiene in the TBIR was 35%, and the molar content of the trans-1,4 structure in the copolymer was 93%, and the Mooney viscosity at 100°C (3+4 minutes) was 20.

### Example 5

Except that 580Kg of naphthenic oil (rubber additive) and 300Kg of silica were added, the other operations were the same as that of Example 3. Finally, 2380Kg of naphthenic oil filled TBIR pellets were obtained. The product was tested and the results showed that the molar content of butadiene in the TBIR was 35%, and the molar content of the trans-1,4 structure in the copolymer was 93%, and the Mooney viscosity at 100°C (3+4 minutes) was 105.

### Example 6

Except that 1.02Kg of 1, 3-dimethoxypropane (electron donor) was added, the other operations were the same as that of Example 3. Finally, 1568Kg product was obtained. The product was tested and the results showed that the molar content of butadiene in the TBIR was 26%, and the molar content of the trans-1,4 structure in the copolymer was 96%, and the Mooney viscosity at 100°C (3+4 minutes) was 95.

### Example 7

A horizontal reactor was subjected to vacuum treatment to remove water and oxygen. 500Kg of butadiene monomer (Bd), 2540Kg of isoprene monomer (Ip), triethylaluminium (Al), supported titanium catalyst (Ti), hydrogen and electron donor were measured and successively added to the reactor through the batching system, wherein the supported titanium catalyst was 1.5Kg containing 12 wt% dibutyl phthalate as internal electron donor Al/Ti = 50 (molar ratio), the hydrogen gas was 160g and the 2, 2-dimethoxypropan (electron donor) was 0.1 mol. Polymerization was carried out at 60°C for 8 hours. After the polymerization, the polymer system was transferred to a twin-screw extruder through a pipeline for terminating the reaction. At the same time, 4.5Kg of ethanol as terminating agent was added to the twin-screw extruder and mixed evenly. The terminated polymer system was transferred to the twin-screw extruder, and 2.44Kg of antioxidant 2264 and 25Kg of naphthenic oil (rubber additive) were added from the inlet of the extrusion devolatilization device. The polymer was fully mixed with the antioxidant and rubber additive through the extrusion devolatilization device. The unreacted butadiene and isoprene monomers were removed by the extrusion devolatilization device under reduced pressure. The polymer was extruded, pelletized, dried, weighed and packed to give 1800Kg naphthenic oil filled TBIR pellets. The product was tested and the results showed that the molar content of butadiene in the TBIR was 34%, and the molar content of the trans-1,4 structure in the copolymer was 93%, and the Mooney viscosity at 100°C (3+4 minutes) was 62.

### Example 8

The polymerization reactors were two series connected horizontal reactors with inner diameter of 2 meters and length of 6 meters. Propeller blade and jacket device were fitted inside the reactors for material transportation and heat conduction, respectively. The two reactors were subjected to vacuum treatment to remove water and oxygen. 400Kg of butadiene monomer (Bd), 2600Kg of isoprene monomer (Ip), triisobutyl aluminum (Al), 1.25Kg supported vanadium catalyst (V) with 12wt% diisobutyl phthalate as internal electron donor and hydrogen gas were measured and successively added to the first reactor through the batching system, wherein Al/Ti = 200 (molar ratio), the hydrogen gas 50g. Polymerization was carried out at 40°C for 4 hours in the first horizontal reactor. Then the polymer system was transferred to the second horizontal reactor and polymerization was carried out at 60°C for 4 hours. The polymer system was transferred to a twin-screw extruder through a pipeline for terminating the reaction. 54g of propanol as terminating agent was added to the twin-screw extruder at the same time for mixing evenly and terminating the reaction. The terminated polymer system was transferred to the twin-screw extruder, and 54g of antioxidant 2264 and 100Kg of carbon black were added through the inlet of the devolatilization device. The unreacted butadiene and isoprene monomers were recycled and refined through recycling device. The polymer was pelletized, dried, weighed, packed and entered products warehouse. Finally, 1900Kg of pelletized carbon black filled trans-1,4-poly(butadiene-co-isoprene) copolymer rubber (TBIR) was obtained. The product was tested and the results showed that the molar content of butadiene unit in the TBIR was 28%, and the molar content of the trans-1,4 structure in the copolymer was 90%, and the Mooney viscosity at 100°C (3+4 minutes) was 78.

## Claims

1. A process for producing trans-1,4-poly(butadiene-co-isoprene) copolymer rubber, comprising:
1) subjecting a polymerization reactor to vacuum treatment and sufficient displacement with nitrogen to remove water and oxygen, adding sequentially predefined amounts of refined isoprene monomer, butadiene monomer, cocatalyst, electron donor, primary catalyst and hydrogen to the polymerization reactor through a batching device, wherein molar ratio of titanium and/or vanadium in the primary catalyst to the monomer is (0.01 to 100)×10⁻⁵ : 1, the molar ratio of aluminum in the cocatalyst to titanium and/or vanadium in the primary catalyst is 1 to 200 : 1, the molar ratio of the hydrogen gas to titanium and/or vanadium in the primary catalyst is 1 to 2000 : 1, the temperature for copolymerization is ranged from 20 to 100 °C, the molar feeding ratio of the butadiene to the isoprene is 0.01 to 50 : 100, and the molar ratio of the electron donor to titanium and/or vanadium in the primary catalyst is 0 to 10 : 1, and polymerization time is from 2 to 48 hours under a constant temperature;
2) transferring the polymer system to a termination device through a pipeline after a predefined polymerization time, and then adding terminating agent to the termination device to terminate the polymerization;
3) transferring the polymer system from the termination device to an extrusion devolatilization device and then adding an antioxidant and/or a rubber additive to the extrusion devolatilization device at the same time; removing unreacted butadiene and isoprene monomers through the extrusion devolatilization device under reduced pressure, separating and refining the butadiene and the isoprene through the separation and refining device, then delivering the refined butadiene and the isoprene back to the polymerization reactor or a storage tank for use;
4) pelletizing the polymer through the extrusion devolatilization device to obtain pelletized trans-1,4-poly(butadiene-co-isoprene) copolymer rubber, drying, metering and then packing the pelletized polymer.

2. The process for producing trans-1,4-poly(butadiene-co-isoprene) copolymer rubber according to claim 1, wherein the molar content of trans-1,4-unit in the trans-1,4-poly(butadiene-co-isoprene) copolymer rubber is more than 85%, the molar content of butadiene unit in the trans-1,4-poly(butadiene-co-isoprene) copolymer rubber is from 0.1 to 60%, Mooney viscosity of the trans-1,4-poly(butadiene-co-isoprene) copolymer rubber at 100°C, 3+4min is from 20 to 120, and the melting temperature of the trans-1,4-poly(butadiene-co-isoprene) copolymer rubber is less than 50°C.

3. The process for producing trans-1,4-poly(butadiene-co-isoprene) copolymer rubber according to claim 1, wherein the primary catalyst is a supported titanium and/or vanadium catalyst, the titanium and/or vanadium account for 1 to 5% of the total mass of the primary catalyst, and internal electron donor accounts for 0 to 20% of the total mass of the primary catalyst; the support of the primary catalyst is one selected from the group consisting of MgCl₂, MgBr₂, MgI₂ and SiO₂; the titanium compound is one selected from the group consisting of TiCl₄, TiBr₄ and TiI₄; the vanadium compound is one, two or more selected from the group consisting of VCl₃, VBr₃, VOCl₃, VOBr₃, VCl₄, VBr₄ and V₂O₅; the internal electron donor is one, two or more selected from the group consisting of ester, ether, ketone and anhydride; and the cocatalyst is one, two or more selected from the group consisting of triethyl aluminum, triisobutyl aluminum, dimethyl aluminum chloride, methyl aluminum dichloride, diethyl aluminum chloride, ethyl aluminum dichloride, diisobutyl aluminum chloride, isobutyl aluminum dichloride, diethyl aluminum hydride, ethyl aluminum hydride, isobutyl aluminum hydride and diisobutyl aluminum hydride.

4. The process for producing trans-1,4-poly(butadiene-co-isoprene) copolymer rubber according to claim 1, wherein the electron donor is one, two or more selected from the group consisting of phosphate ester, ether, ketone, anhydride, phenol, amine and silane compound.

5. The process for producing trans-1,4-poly(butadiene-co-isoprene) copolymer rubber according to claim 1, wherein the terminating agent is one, two or more selected from the group consisting of carbon monoxide, carbon dioxide, nitrogen, air, water, and alcohol, acid, ketone, amine and phenol containing 4 to 8 carbon atoms, and the molar ratio of the terminating agent to titanium and/or vanadium in the primary catalyst is 1 to 200 : 1; the antioxidant is one, two or more selected from the group consisting of 4010NA, MB, 2264, 264, MBZ, 800A, 1010A, 1010, 168, DSTP, 626, 4020, and 1076, and the weight ratio of the antioxidant to the TBIR is 0.01 to 1 : 100; and the rubber additive is one, two or more selected from the group consisting of paraffin, aromatic oil, cycloparaffinic oil, C5 resin, stearic acid, calcium stearate, magnesium stearate, zinc oxide, silicon dioxide, carbon black, and modified derivatives thereof, and the weight ratio of the rubber additive to the TBIR is 1 to 50 : 100.

6. An apparatus for producing trans-1,4-poly(butadiene-co-isoprene) copolymer rubber, comprising a recovery and refining unit, a polymerization unit, a post-processing unit and a utility unit, wherein
the recovery and refining unit comprises:
a refiner for refining butadiene, isoprene and hydrogen gas, including refining towers,
a recovery and separation device for separating and delivering recovered unreacted butadiene and isoprene to the polymerization reactor or storage tank, including a recovery storage tank, a gas holder and a separation tower, and
a storage and batching device for the cocatalyst, the main catalyst and the electron donor;
the polymerization unit comprises:
a batching device for metering and pumping the butadiene and isoprene, a device for metering and pumping the primary catalyst, cocatalyst and electron donor, and a device for metering the hydrogen gas,
a polymerization reactor including kettle polymerization reactor or tower polymerization reactor or uniaxial horizontal polymerization reactor or biaxial horizontal polymerization reactor or loop polymerization reactor or tubular polymerization reactor; and
a monitor and controller device, which comprises an online temperature monitor, an online pressure monitor, and an online material detector and an online material controller; wherein
the online material detector comprises an online viscosity detector and an online concentration detector, and
the online material controller comprises a material solenoid valve and a computerized controller;
the post-processing unit comprises
a termination device,
an extrusion devolatilization device,
a preparation and delivery device for the terminating agent,
a preparation and delivery device for the antioxidant,
a preparation and delivery device for the rubber additive, and
a delivering metering and packing device for the polymer system; wherein
the termination device is a twin-screw extruder, and
the extrusion devolatilization device comprises an extruder, a pelletizer, a blow drier and a vacuum pump, for removing unreacted monomers, and for blending the antioxidant and/or the rubber additive, extruding, pelletizing and drying the polymer;
the utility unit comprises
a cold, hot water and/or steam pipeline device for controlling the temperature of the polymerization reactor, and
a vacuum and high purity nitrogen device for gas displacement in the polymerization reactor before polymerization and during overhaul.

7. The apparatus for producing trans-1,4-poly(butadiene-co-isoprene) copolymer rubber according to claim 6, wherein the polymerization reactor comprises one kind of polymerization reactor used independently, or multiple kinds of polymerization reactors used in combination; the extrusion devolatilization device includes one extruder, or two or more extruders in series and/or in parallel, wherein the extruder is a single-screw extruder, a co-rotating twin-screw extruder, a counter-rotating twin-screw extruder or a horizontal drying extruder, and wherein extruders used in series decreases the content of volatile material in the copolymer rubber, while extruders used in parallel increases extrusion yield of the copolymer rubber.

8. The process for producing trans-1,4-poly(butadiene-co-isoprene) copolymer rubber according to claim 1, wherein the polymerization is batch polymerization or continuous polymerization.

9. The process for producing trans-1,4-poly(butadiene-co-isoprene) copolymer rubber according to any one of claims 1 to 5 and 8, wherein the trans-1,4-poly(butadiene-co-isoprene) copolymer rubber produced by the method exhibits excellent flexural fatigue resistance, and can be used in the fields of tire, vibration absorber and damping material.

10. The apparatus for producing trans-1,4-poly(butadiene-co-isoprene) copolymer rubber according to claims 6 or 7, wherein the trans-1,4-poly(butadiene-co-isoprene) copolymer rubber produced with the apparatus exhibits excellent flexural fatigue resistance, and can be used in the fields of tire, vibration absorber and damping material.

## Patentansprüche

1. Verfahren zur Herstellung von Trans-1,4-Poly(Butadien-Co-Isopren)-Copolymer-Gummi, welches aufweist:
1) Aussetzen eines Polymerisationsreaktors einer Vakuumbehandlung und einer ausreichenden Verdrängung mit Stickstoff, um Wasser und Sauerstoff zu entfernen, sequentielles Hinzufügen vordefinierter Mengen von raffiniertem Isopren-Monomer, Butadien-Monomer, Co-Katalysator, Elektronen-Donor, Primär-Katalysator und Wasserstoff zu dem Polymerisationsreaktor durch eine Ansetzvorrichtung, wobei das molare Verhältnis von Titan und/oder Vanadium in dem Primär-Katalysator zu dem Monomer (0,01 bis 100)×10⁻⁵ : 1 beträgt, das molare Verhältnis von Aluminium in dem Co-Katalysator zu Titan und/oder Vanadium in dem Primär-Katalysator 1 bis 200 : 1 beträgt, das molare Verhältnis des Wasserstoffgases zu Titan und/oder Vanadium in dem Primär-Katalysator 1 bis 2000 : 1 beträgt, die Temperatur zur Copolymerisierung von 20 bis 100 °C reicht, das molare Zuführ-Verhältnis des Butadiens zu dem Isopren 0,01 bis 50 : 100 beträgt, und das molare Verhältnis des Elektronen-Donors zu Titan und/oder Vanadium in dem Primär-Katalysator 0 bis 10 : 1 beträgt, und die Polymerisationszeit von 2 bis 48 Stunden unter konstanter Temperatur beträgt;
2) Überführen des Polymersystems zu einer Terminierungsvorrichtung durch eine Rohrleitung nach einer vordefinierten Polymerisationszeit, und dann Hinzufügen von Terminierungsmittel zu der Terminierungsvorrichtung, um die Polymerisierung zu beenden;
3) Überführen des Polymersystems von der Terminationsvorrichtung zu einer Extrusions-Entgasungsvorrichtung und dann Hinzufügen eines Antioxidationsmittels und/oder eines Gummi-Additivs zu der Extrusions-Entgasungsvorrichtung zur gleichen Zeit; Entfernen von nicht-reagierten Butadien- und Isopren-Monomeren durch die Extrusions-Entgasungsvorrichtung unter reduziertem Druck; Abtrennen und Raffinieren des Butadiens und des Isoprens durch die Trenn- und Raffinierungsvorrichtung, dann Liefern des raffinierten Butadiens und des Isoprens zurück zu dem Polymerisationsreaktor oder einem Speichertank zur Verwendung;
4) Pelletieren des Polymers durch die Extrusions-Entgasungsvorrichtung zum Erhalt von pelletiertem Trans-1,4-Poly(Butadien-Co-Isopren)-Copolymer-Gummi, Trocknen, Dosieren und dann Verpacken des pelletierten Polymers.

2. Das Verfahren zur Herstellung von Trans-1,4-Poly(Butadien-Co-Isopren)-Copolymer-Gummi nach Anspruch 1, wobei der molare Gehalt der Trans-1,4-Einheit in dem Trans-1,4-Poly(Butadien-Co-Isopren)-Copolymer-Gummi mehr als 85% beträgt, der molare Gehalt der Butadien-Einheit in dem Trans-1,4-Poly(Butadien-Co-Isopren)-Copolymer-Gummi von 0,1 bis 60% beträgt, die Mooney-Viskosität des Trans-1,4-Poly(Butadien-Co-Isopren)-Copolymer-Gummis bei 100°C 3+4 min. von 20 bis 120 beträgt, und die Schmelztemperatur des Trans-1,4-Poly(Butadien-Co-Isopren)-Copolymer-Gummis weniger als 50°C beträgt.

3. Das Verfahren zur Herstellung von Trans-1,4-Poly(Butadien-Co-Isopren)-Copolymer-Gummi nach Anspruch 1, wobei der Primär-Katalysator ein getragener Titan und/oder Vanadium-Katalysator ist, das Titan und/oder Vanadium 1 bis 5% der Gesamtmasse des Primär-Katalysators beträgt, der interne Elektronen-Donor 0 bis 20% der Gesamtmasse des Primär-Katalysators beträgt; der Träger des Primär-Katalysators einer ist, ausgewählt aus der Gruppe, die aus MgCl₂, MgBr₂, MgI₂ und SiO₂ besteht; die Titan-Verbindung eine ist, ausgewählt aus der Gruppe, die aus TiCl₄, TiBr₄ und TiI₄ besteht; die Vanadium-Verbindung eine, zwei oder mehr ist, ausgewählt aus der Gruppe, die aus VCl₃, VBr₃, VOCl₃, VOBr₃, VCl₄, VBr₄ und V₂O₅ besteht; der interne Elektronen-Donor einer zwei oder mehr ist, ausgewählt aus der Gruppe, die aus Ester, Ether, Keton und Anhydrid besteht; und der Co-Katalysator einer, zwei oder mehr ist, ausgewählt aus der Gruppe, die aus Triethyl-Aluminium, Triisobutyl-Aluminium, Dimethyl-Aluminium-Chlorid, Methyl-Aluminium-Dichlorid, Diethyl-Aluminium-Chlorid, Ethyl-Aluminium-Dichlorid, Diisobutyl-Aluminium-Chlorid, Isobutyl-Aluminium-Dichlorid, Diethyl-Aluminium-Hydrid, Ethyl-Aluminium-Hydrid, Isobutyl-Aluminium-Hydrid und Diisobutyl-Aluminium-Hydrid besteht.

4. Das Verfahren zur Herstellung von Trans-1,4-Poly(Butadien-Co-Isopren)-Copolymer-Gummi nach Anspruch 1, wobei der Elektronen-Donor einer, zwei oder mehr ist, ausgewählt aus der Gruppe, die aus Phosphat-Ester, Ether, Keton, Anhydrid, Phenol, Amin und Silan-Verbindung besteht.

5. Das Verfahren zur Herstellung von Trans-1,4-Poly(Butadien-Co-Isopren)-Copolymer-Gummi nach Anspruch 1, wobei das Terminierungsmittel eines, zwei oder mehr ist, ausgewählt aus der Gruppe, die aus Kohlenmonoxid, Kohlendioxid, Stickstoff, Luft, Wasser und Alkohol, Säure, Keton, Amin und Phenol, enthaltend 4 bis 8 Kohlenstoffatome, besteht, und das molare Verhältnis des Terminierungsmittels zu Titan und/oder Vanadium in dem Primär-Katalysator 1 bis 200 : 1 beträgt; das Antioxidationsmittel eines, zwei oder mehr beträgt, ausgewählt aus der Gruppe, die aus 4010NA, MB, 2264, 264, MBZ, 800A, 1010A, 1010, 168, DSTP, 626, 4020, und 1076 besteht, und das Gewichtsverhältnis des Antioxidationsmittels zu dem TBIR 0,01 bis 1 : 100 beträgt; und das Gummi-Additiv eines, zwei oder mehr ist, ausgewählt aus der Gruppe, die aus Paraffin, aromatischem Öl, Zykloparaffin-Öl, C5-Harz, Stearinsäure, Kalzium-Stearat, MagnesiumStearat, Zinkoxid, Silizium-Dioxid, Ruß und modifizierten Derivaten davon, besteht, und das Gewichtsverhältnis des Gummi-Additivs zu dem TBIR 1 bis 50 : 100 beträgt.

6. Vorrichtung zum Herstellung von Trans-1,4-Poly(Butadien-Co-Isopren)-Copolymer-Gummi, die eine Wiedergewinnungs- und Raffinierungseinheit, eine Polymerisationseinheit, eine Nachbearbeitungseinheit und eine Nutzeinheit aufweist, wobei:
die Wiedergewinnungs- und Raffinierungseinheit aufweist:
einen Raffinierer zum Raffinieren von Butadien, Isopren und Wasserstoffgas, einschließlich Raffinierungstürmen,
eine Wiedergewinnungs- und Trennvorrichtung zum Trennen und Liefern von wiedergewonnenem nicht-reagiertem Butadien und Isopren zu dem Polymerisationsreaktor oder Speichertank, einschließlich eines Wiedergewinngungsspeichertanks, eines Gashalters und eine Trennturms, und
eine Speicher- und Ansetzvorrichtung für den Co-Katalysator, den Hauptkatalysator und den Elektronen-Donor;
wobei die Polymerisationseinheit aufweist:
eine Ansetzvorrichtung zum Dosieren und Pumpen des Butadiens und Isoprens, eine Vorrichtung zum Dosieren und Pumpen des Primär-Katalysators, Co-Katalysators und Elektronen-Donors, sowie eine Vorrichtung zum Dosieren des Wasserstoffgases;
einen Polymerisationsreaktor, der einen Kessel-Polymerisationsreaktor oder Turm-Polymerisationsreaktor oder uniaxialen horizontalen Polymerisationsreaktor oder bi-axialen horizontalen Polymerisationsreaktor oder Schleifen-Polymerisationsreaktor oder rohrförmigen Polymerisationsreaktor enthält; und
ein Monitor- und Steuergerät, das einen Online-Temperaturmonitor, einen Online-Druckmonitor und einen Online-Materialdetektor und einen Online-Material-Controller aufweist, wobei
der Online-Materialdetektor einen Online-Viskositätsdetektor und einen Online-Konzentrationsdetektor aufweist, und
der Online-Materialdetektor ein Material-Solenoidventil und ein computerisiertes Steuergerät aufweist;
die Nachbearbeitungseinheit aufweist:
eine Terminierungsvorrichtung,
eine Extrusions-Entgasungsvorrichtung,
eine Vorbereitungs- und Liefervorrichtung für das Terminierungsmittel,
eine Vorbereitungs- und Liefervorrichtung für das Antioxidationsmittel,
eine Vorbereitungs- und Liefervorrichtung für das Gummi-Additiv, und
eine Lieferungs-, Dosierungs- und Verpackungsvorrichtung für das Polymersystem, wobei
die Terminierungsvorrichtung ein Doppelschraubenextruder ist, und
die Extrusions-Entgasungsvorrichtung einen Extruder, einen Pelletierer,
einen Blastrocker und eine Vakuumpumpe aufweist, um nicht-reagierte Monomere zu entfernen und um das Antioxidationsmittel und/oder das Gummi-Additiv zu vermischen, extrudieren, pelletieren und Trocknen des Polymers;
wobei die Nutzeinheit aufweist:
eine Kalt-, Heißwasser- und/oder Dampfrohrleitungsvorrichtung zum Steuern der Temperatur des Polymerisationsreaktors, und
eine Vakuum- und Hochreiner-Stickstoff-Vorrichtung zur Gasverdrängung in dem Polymerisationsreaktor vor der Polymerisierung und während Überholung.

7. Die Vorrichtung zum Herstellung von Trans-1,4-Poly(Butadien-Co-Isopren)-Copolymer-Gummi nach Anspruch 6, wobei der Polymerisationsreaktor eine Art von Polymerisationsreaktor aufweist, der unabhängig benutzt wird, oder mehrere Arten von Polymerisationsreaktoren, die in Kombination verwendet werden; die Extrusions-Entgasungsvorrichtung einen Extruder oder zwei oder mehr Extruder in Serie und/oder parallel enthält, wobei der Extruder ein Einzelschrauben-Extruder ist, ein gleichsinnig drehender Doppelschrauben-Extruder, ein gegensinnig drehender Doppelschrauben-Extruder oder ein horizontaler Trocknungs-Extruder ist, und wobei in Serie verwendete Extruder den Gehalt von flüchtigem Material in dem Copolymer-Gummi verringern, während parallel verwendete Extruder die Extrusionsausbeute des Copolymer-Gummis erhöhen.

8. Das Verfahren zur Herstellung von Trans-1,4-Poly(Butadien-Co-Isopren)-Copolymer-Gummi nach Anspruch 1, wobei die Polymerisierung eine Portions-Polymerisierung oder eine kontinuierliche Polymerisierung ist.

9. Das Verfahren zur Herstellung von Trans-1,4-Poly(Butadien-Co-Isopren)-Copolymer-Gummi nach einem der Ansprüche 1 bis 5 und 8, wobei der mit dem Verfahren hergestellte Trans-1,4-Poly(Butadien-Co-Isopren)-Copolymer-Gummi exzellente Biegemüdigkeit-Beständigkeit aufzeigt, und in den Gebieten von Reifen, Vibrationsdämpfer und Dämpfmaterial verwendet werden kann.

10. Die Vorrichtung zur Herstellung von Trans-1,4-Poly(Butadien-Co-Isopren)-Copolymer-Gummi nach den Ansprüchen 6 oder 7, wobei der mit der Vorrichtung hergestellte Trans-1,4-Poly(Butadien-Co-Isopren)-Copolymer-Gummi eine ausgezeichnete Biegemüdigkeit-Beständigkeit aufzeigt, und in den Gebieten von Reifen, Vibrationsdämpfer und Dämpfmaterial verwendet werden kann.

## Revendications

1. Procédé pour la production de caoutchouc copolymère de *trans-1,4-*poly(butadiène-*co*-isoprène), comprenant :
1) la soumission d'un réacteur de polymérisation à un traitement de vide et le déplacement suffisant avec de l'azote pour retirer l'eau et l'oxygène, l'addition de manière séquentielle de quantités prédéfinies de monomère d'isoprène raffiné, de monomère de butadiène, d'un cocatalyseur, d'un donneur d'électrons, d'un catalyseur primaire et d'hydrogène au réacteur de polymérisation à travers un dispositif de mise en lot, dans lequel le rapport molaire du titane et/ou du vanadium dans le catalyseur primaire au monomère est de (0,01 à 100) x 10⁻⁵: 1, le rapport molaire de l'aluminium dans le cocatalyseur au titane et/ou au vanadium dans le catalyseur primaire est de 1 à 200 : 1, le rapport molaire du gaz hydrogène au titane et/ou au vanadium dans le catalyseur primaire est de 1 à 2000 : 1, la température pour la copolymérisation s'étends de 20 à 100°C, le rapport d'alimentation molaire du butadiène à l'isoprène est de 0,01 à 50 : 100, et le rapport molaire du donneur d'électrons au titane et/ou au vanadium dans le catalyseur primaire est de 0 à 10 : 1, et le temps de polymérisation est de 2 à 48 heures sous une température constante ;
2) le transfert du système polymère vers un dispositif de terminaison à travers une conduite après un temps de polymérisation prédéfini, et ensuite l'addition d'agent de terminaison au dispositif de terminaison pour terminer la polymérisation ;
3) le transfert du système polymère depuis le dispositif de terminaison vers un dispositif de dévolatilisation par extrusion et ensuite l'addition d'un antioxydant et/ou d'un additif de caoutchouc au dispositif de dévolatilisation par extrusion en même temps ; le retrait des monomères de butadiène et d'isoprène n'ayant pas réagi à travers le dispositif de dévolatilisation par extrusion sous pression réduite, la séparation et le raffinage du butadiène et de l'isoprène à travers le dispositif de séparation et de raffinage, ensuite la livraison du butadiène et de l'isoprène raffinés en retour vers le réacteur de polymérisation ou une cuve de stockage pour l'utilisation ;
4) la mise sous forme de pastilles du polymère à travers le dispositif de dévolatilisation par extrusion pour obtenir un caoutchouc copolymère de *trans-1,4-*poly(butadiène-*co-*isoprène) sous forme de pastilles, le séchage, le dosage et ensuite l'emballage du polymère en pastilles.

2. Procédé pour la production de caoutchouc copolymère de *trans-1,4-*poly(butadiène-*co*-isoprène) selon la revendication 1, dans lequel la teneur molaire de l'unité *trans*-1,4 dans le caoutchouc copolymère de *trans*-1,4-poly(butadiène-co-isoprène) est supérieure à 85 %, la teneur molaire de l'unité de butadiène dans le caoutchouc copolymère de *trans*-1,4-poly(butadiène-*co*-isoprène) est de 0,1 à 60 %, la viscosité de Mooney du caoutchouc copolymère de *trans-1,4-*poly(butadiène-*co*-isoprène) à 100°C, 3 + 4 min est de 20 à 120, et la température de fusion du caoutchouc copolymère de *trans-*1,4-poly(butadiène-*co*-isoprène) est inférieure à 50°C.

3. Procédé pour la production de caoutchouc copolymère de *trans-1,4-*poly(butadiène-*co*-isoprène) selon la revendication 1, dans lequel le catalyseur primaire est un catalyseur de titane et/ou de vanadium supporté, le titane et/ou le vanadium comptent pour 1 à 5 % de la masse totale du catalyseur primaire, et le donneur d'électrons interne compte pour 0 à 20 % de la masse totale du catalyseur primaire ; le support du catalyseur primaire est l'un sélectionné dans le groupe constitué de MgCl₂, MgBr₂, MgI₂ et SiO₂ ; le composé de titane est l'un sélectionné dans le groupe constitué de TiCl₄, TiBr₄ et TiI₄ ; le composé de vanadium est l'un, deux ou plusieurs sélectionnés dans le groupe constitué de VCl₃, VBr₃, VOCl₃, VOBr₃, VCl₄, VBr₄ et V₂O₅ ; le donneur d'électrons interne est l'un, deux ou plusieurs sélectionnés dans le groupe constitué de l'ester, de l'éther, de la cétone et de l'anhydride ; et le cocatalyseur est l'un, deux ou plusieurs sélectionnés dans le groupe constitué du triéthyl aluminium, triisobutyl aluminium, chlorure de diméthyl aluminium, dichlorure de méthyl aluminium, chlorure de diéthyl aluminium, dichlorure d'éthyl aluminium, chlorure de diisobutyl aluminium, dichlorure d'isobutyl aluminium, hydrure de diéthyl aluminium, hydrure d'éthyl aluminium, hydrure d'isobutyl aluminium et hydrure de diisobutyl aluminium.

4. Procédé pour la production de caoutchouc copolymère de *trans-1,4-*poly(butadiène-*co-*isoprène) selon la revendication 1, dans lequel le donneur d'électrons est l'un, deux ou plusieurs sélectionnés dans le groupe constitué d'un composé ester phosphate, éther, cétone, anhydride, phénol, amine et silane.

5. Procédé pour la production de caoutchouc copolymère de *trans-1,4-*poly(butadiène-*co*-isoprène) selon la revendication 1, dans lequel l'agent de terminaison est l'un, deux ou plusieurs sélectionnés dans le groupe constitué du monoxyde de carbone, du dioxyde de carbone, de l'azote, de l'air, de l'eau, et de l'alcool, de l'acide, de la cétone, d'une amine et d'un phénol contenant de 4 à 8 atomes de carbone, et le rapport molaire de l'agent de terminaison au titane et/ou au vanadium dans le catalyseur primaire est de 1 à 200:1 ; l'antioxydant est l'un, deux ou plusieurs sélectionnés dans le groupe constitué de 4010NA, MB, 2264, 264, MBZ, 800A, 1010A, 1010, 168, DSTP, 626, 4020, et 1076, et le rapport en poids de l'antioxydant au TBIR est de 0,01 à 1:100 ; et l'additif de caoutchouc est l'un, deux ou plusieurs sélectionnés dans le groupe constitué de la paraffine, de l'huile aromatique, de l'huile cycloparaffinique, de la résine en C5, de l'acide stéarique, du stéarate de calcium, du stéarate de magnésium, de l'oxyde de zinc, du dioxyde de silicium, du noir de carbone, et de leurs dérivés modifiés, et le rapport en poids de l'additif de caoutchouc au TBIR est de 1 à 50:100.

6. Appareil pour la production de caoutchouc copolymère de *trans-1,4-*poly(butadiène-*co*-isoprène), comprenant une unité de récupération et de raffinage, une unité de polymérisation, une unité de post-traitement et une unité utilitaire, dans lequel
l'unité de récupération et de raffinage comprend :
un dispositif de raffinage pour raffiner le gaz butadiène, isoprène et hydrogène, incluant des tours de raffinage,
un dispositif de récupération et de séparation pour séparer et délivrer le butadiène et l'isoprène récupérés n'ayant pas réagi vers le réacteur de polymérisation ou la cuve de stockage, incluant une cuve de stockage de récupération, un dispositif de retenue de gaz et une tour de séparation, et
un dispositif de stockage et de mise en lot pour le cocatalyseur, le catalyseur principal et le donneur d'électrons ;
l'unité de polymérisation comprend :
un dispositif de mise en lot pour doser et pomper le butadiène et l'isoprène, un dispositif de dosage et de pompage du catalyseur primaire, du cocatalyseur et du donneur d'électrons, et un dispositif de dosage du gaz hydrogène,
un réacteur de polymérisation incluant un réacteur cuve de polymérisation ou un réacteur de polymérisation à tour ou un réacteur de polymérisation horizontal monoaxial ou un réacteur de polymérisation horizontal biaxial ou un réacteur de polymérisation en boucle ou un réacteur de polymérisation tubulaire ; et
un dispositif de surveillance et de commande, qui comprend un dispositif de surveillance de la température en ligne, un dispositif de surveillance de la pression en ligne, et un détecteur de matériau en ligne et un contrôleur de matériau en ligne ; dans lequel
le détecteur de matériau en ligne comprend un détecteur de viscosité en ligne et un détecteur de concentration en ligne, et
le contrôleur de matériau en ligne comprend une vanne solénoïde de matériau et un contrôleur informatisé ;
l'unité de post-traitement comprend
un dispositif de terminaison,
un dispositif de dévolatilisation par extrusion,
un dispositif de préparation et de livraison pour l'agent de terminaison,
un dispositif de préparation et de livraison pour l'antioxydant,
un dispositif de préparation et de livraison pour l'additif de caoutchouc, et
un dispositif de dosage de la livraison et d'emballage pour le système polymère ; dans lequel
le dispositif de terminaison est une extrudeuse à double vis, et
le dispositif de dévolatilisation par extrusion comprend une extrudeuse, un agent de mise en pastilles, un sécheur par soufflage et une pompe sous vide, pour retirer les monomères n'ayant pas réagi, et pour mélanger l'antioxydant et/ou de l'additif de caoutchouc, extruder, mettre sous forme de pastilles et sécher le polymère ;
l'unité utilitaire comprend
un dispositif conducteur d'eau froide, chaude et/ou de vapeur pour réguler la température du réacteur de polymérisation, et
un dispositif d'azote de haute pureté et de vide pour le déplacement de gaz dans le réacteur de polymérisation avant la polymérisation et durant la révision.

7. Appareil pour la production de caoutchouc copolymère de *trans-1,4-*poly(butadiène-*co*-isoprène) selon la revendication 6, dans lequel le réacteur de polymérisation comprend un type de réacteur de polymérisation utilisé indépendamment, ou de multiples types de réacteurs de polymérisation utilisés en combinaison ; le dispositif de dévolatilisation par extrusion inclut une extrudeuse, ou deux ou plusieurs extrudeuses en série et/ou en parallèle, dans lequel l'extrudeuse est une extrudeuse à simple vis, une extrudeuse à double vis à co-rotation, une extrudeuse à double vis à contre-rotation ou une extrudeuse de séchage horizontale, et dans lequel les extrudeuses utilisées en série réduisent la teneur du matériau volatil dans le caoutchouc copolymère, tandis que les extrudeuses utilisées en parallèle accroissent le rendement d'extrusion du caoutchouc copolymère.

8. Procédé pour la production de caoutchouc copolymère de *trans-1,4-*poly(butadiène-*co*-isoprène) selon la revendication 1, dans lequel la polymérisation est une polymérisation en lot ou une polymérisation continue.

9. Procédé pour la production de caoutchouc copolymère de *trans-1,4-*poly(butadiène-*co*-isoprène) selon l'une quelconque des revendications 1 à 5 et 8, dans lequel le caoutchouc copolymère de *trans*-1,4-poly(butadiène-*co*-isoprène) produit par le procédé fait preuve d'une excellente résistance à la fatigue sous flexion, et peut être utilisé dans les domaines des pneumatiques, des amortisseurs de vibration et des matériaux d'amortissement.

10. Appareil pour la production de caoutchouc copolymère de *trans-1,4-*poly(butadiène-*co*-isoprène) selon les revendications 6 ou 7, dans lequel le caoutchouc copolymère de *trans*-1,4-poly(butadiène-*co*-isoprène) produit avec l'appareil fait preuve d'une excellente résistance à la fatigue sous flexion, et peut être utilisé dans les domaines des pneumatiques, des amortisseurs de vibration et des matériaux d'amortissement.
